# EUROPEAN PATENT APPLICATION

(11) **EP 3 043 272 A1**
(43) Date of publication of application: **13.07.2016**
(21) Application number: 16150650.6
(22) Date of filing: 08.01.2016
(51) Int. Cl.: G06F 17/30, G06F 17/21

(54) **SYSTEM AND METHOD FOR CURATING DIGITAL CONTENT FROM A DIGITAL CONTENT PLATFORM**

(30) Priority: 12.01.2015 US 201562102176 P
(71) Applicant: Patel, Ronak, Princeton, NJ 08540 (US)
(72) Inventor: Patel, Ronak, Princeton, NJ 08540 (US)
(74) Representative: Cross, James Peter Archibald

(57) **Abstract**

A method for curating digital content comprises, at a digital content registration system: receiving registration information to register a user therewith; receiving digital content platform account credentials for a digital content platform account of a digital content platform; transmitting to the digital content platform a request for access to digital content platform account data, along with the digital content platform account credentials; automatically monitoring digital content platform account data for an extraction marker of an extraction tag; detecting the extraction marker of the extraction tag in marked digital content created by the digital content platform account; identifying a collection title of the extraction tag adjacent to the extraction marker; extracting parent digital content indicated by the extraction marker of the marked digital content; and adding to a database the parent digital content extracted to a collection having the collection title identified.

## Description

### FIELD OF THE DISCLOSURE

The present disclosure relates to a system and method for curating digital content from a digital content platform, e.g., website. More specifically, the present disclosure relates to digital content curation from a digital content platform, e.g., a website, without having to leave said platform, e.g., the website.

### BACKGROUND

A number of different products are available that cater to the demand for curation of digital content. However, many of these products require curation from the software platform itself. As an example, for some products, if a user is logged into a social network through a web browser and comes across a post the user would like to add to his/her collection or feed, the user leaves the webpage and logs into the desired platform (e.g., Storify or TweetDeck) to add the post to his/her feed. Such a design can be cumbersome and time consuming for users.

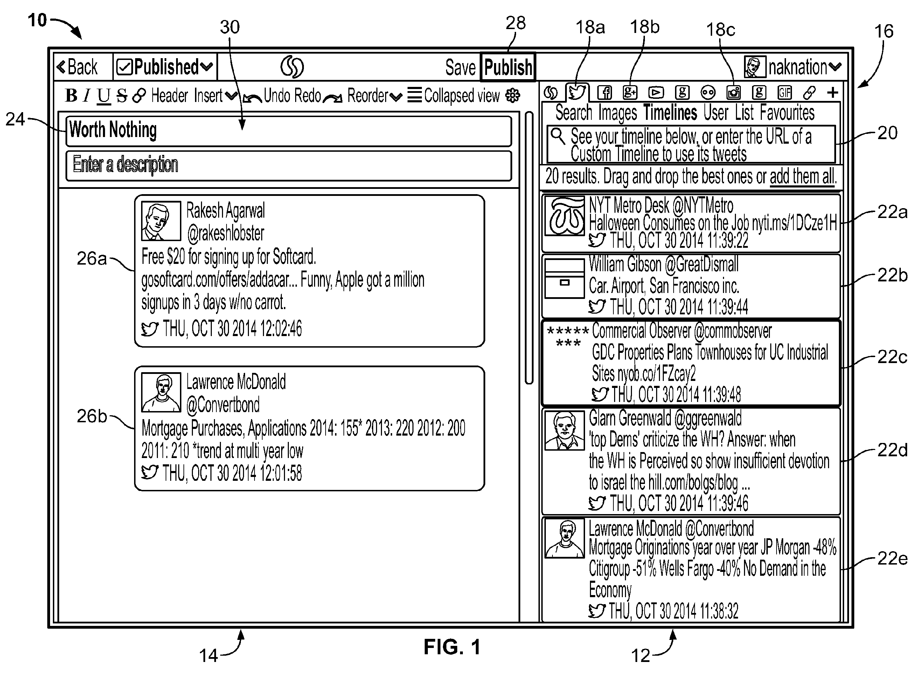

**FIGS. 1-5** are prior art products for curating digital content. **FIGS. 1-2** illustrate the Storify platform **10** of the prior art for curating digital content. More specifically, **FIG. 1** illustrates the Storify platform **10** of the prior art when creating or editing a collection of curated digital content. The Storify platform **10** comprises a supply content portion **12** and a curated content portion **14** for each Storify collection created and/or edited. The supply content portion **12** includes a network selection bar **16** displaying various network icons (e.g., Twitter **18a**, Google+ **18b**, Instagram **18c**, etc.) to select. Once a network icon **18a-18c** of the network selection bar **16** is selected, a user can search (via the search bar **20**) for digital content within the network selected. The supply content **22a-22e** which results from the search is populated in the supply content portion **12** of the platform **10**.

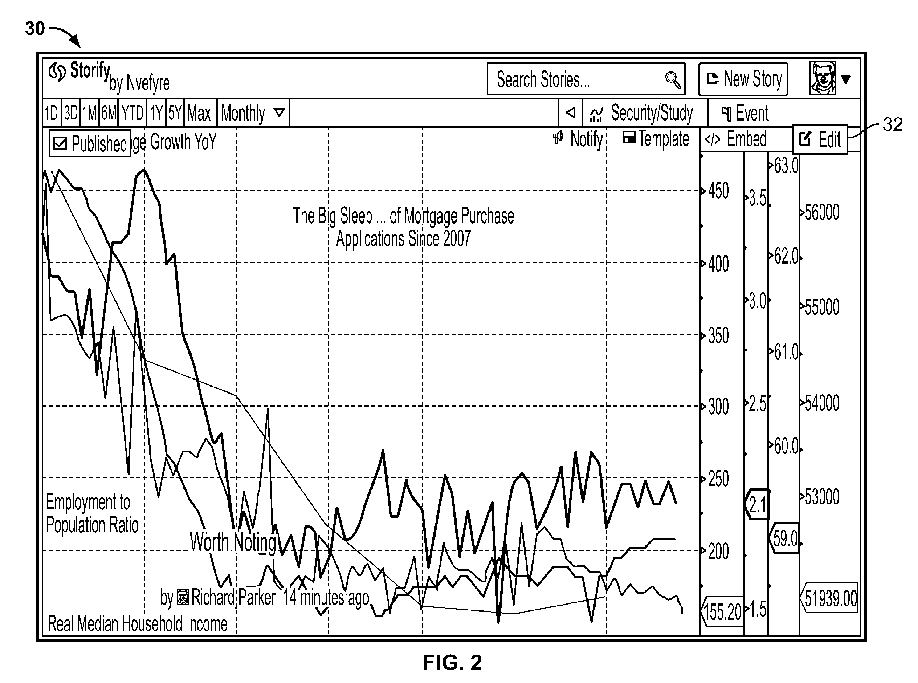

The Storify platform **10** could include one or more Storify collections **30** of curated content **26a-26b.** Each Storify collection **30** has a title **24** which can be entered (for newly created Storify collections) and/or edited (for previously created Storify collections) by a user. A user creates curated content **26a-26b** by adding one or more supply contents **22a-22e** to a selected Storify collection **30**, such as by dragging and dropping a supply content **22a-22e** from the supply content portion **12** to the curated content portion **14** of the Storify platform **10**. Once the curated content **26a-26b** has been added to the Storify collection **30**, a user can publish the Storify collection **30** for public access (e.g., posting to a website, embedding in a website, etc.) by selecting the publish button **28**. However, as shown in **FIG.** 2, to edit or update a Storify collection **30** of the prior art, a user returns to and enters the Storify platform, selects the edit button **32**, and repeats the process described above.

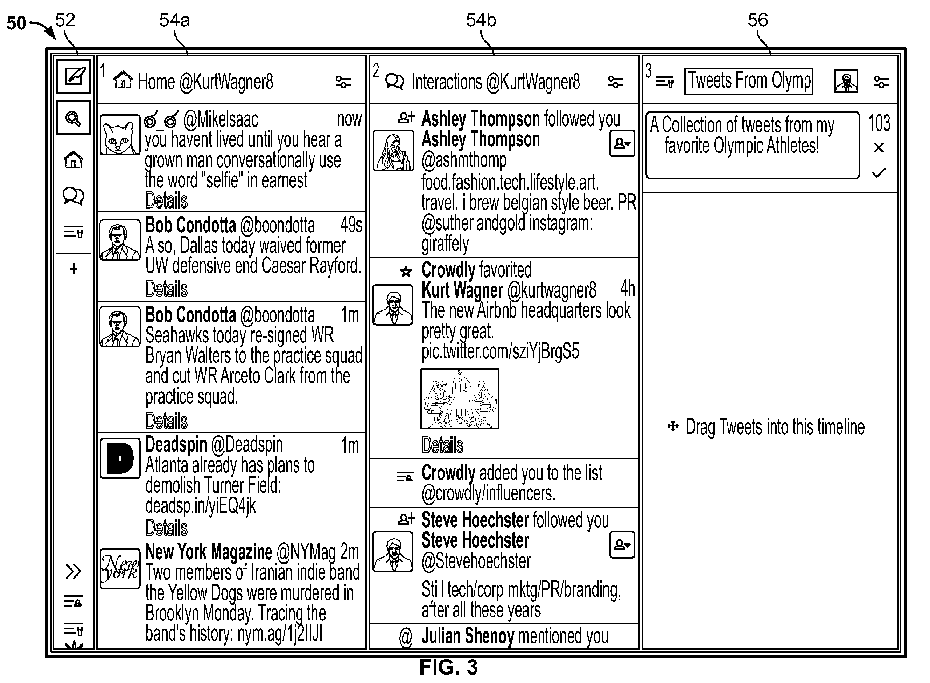

**FIGS. 3-5** illustrate the TweetDeck platform **50** of the prior art for curating digital content. More specifically, **FIG. 3** illustrates the TweetDeck platform **50** of the prior art when creating or editing a custom TweetDeck timeline. The TweetDeck platform **50** comprises a toolbar **52** and one or more TweetDeck timelines **54a-54b.** One type of timeline available is a custom timeline **56** composed of curated digital content. The curated digital content of the custom timeline **56** is compiled from one or more of the other TweetDeck timelines **54a-54b.**

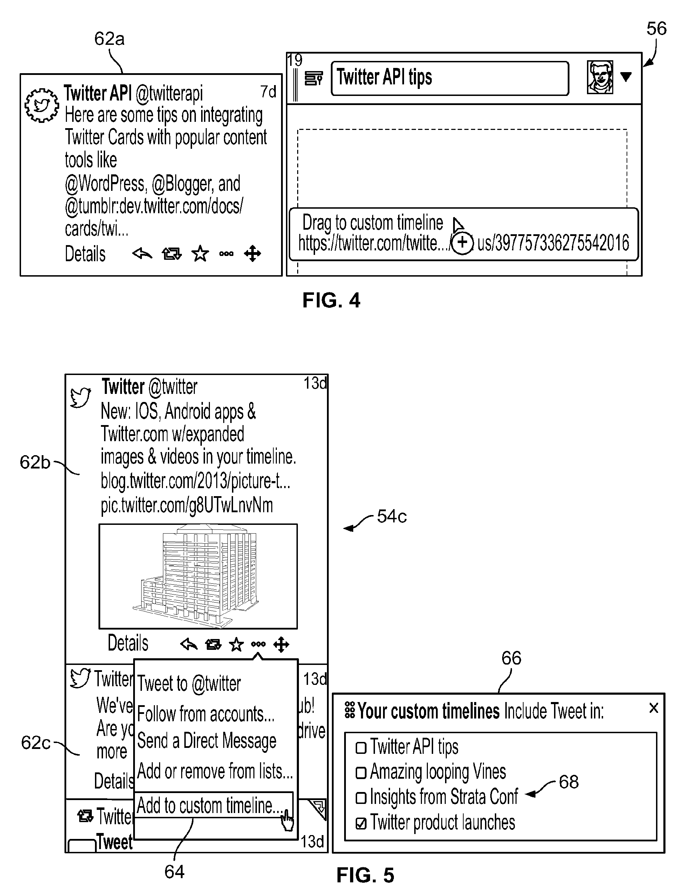

One way to curate content into the custom timeline **56**, as shown in **FIG. 4**, is to drag and drop digital content **62a** (e.g., Tweet or post) into the custom timeline **56**. Another way, as shown in **FIG. 5**, is to click on the digital content **62b-62c** for a *more action menu* **64**, and select *Add to custom timeline* to display a custom timeline submenu **66**. A user can then select one or more of the custom timelines **68** from the custom timeline submenu **66** to add the content thereto. Once added the custom timeline can be shared on Twitter or embedded into other webpages. To edit or update the custom timeline **56**, a user returns to the TweetDeck platform **50**, and then repeats the process described above.

### STATEMENTS OF THE INVENTION

According to one aspect of the invention, there is provided a method for curating digital content according to claim 1. According to another aspect of the invention, there is provided a digital content creation system according to claim 9. According to another aspect of the invention there is provided a computer program product according to claim 10.

A system and method for curating digital content from a digital content platform, e.g., a website is disclosed herein, according to specific embodiment of the invention. The digital content curation system allows a user to curate digital content from, for example, a website such as a third party website without having to leave the website to do so. The digital content curation system monitors (e.g., polls) the digital content platform, e.g., the website, for digital content created by a linked website account (e.g., via a mobile device of a user) that uses an extraction marker. The digital content curation system extracts the corresponding desired digital content and places it in the collection identified with the extraction marker. Accordingly, the digital content curation system allows a user to update and/or create collections of digital content from, for example, a website (e.g., Twitter), without having to leave the website (e.g., Twitter). The present disclosure is applicable to websites and other digital content platforms, and it shall be understood that a disclosure herein with respect to a "website" is also more generally a disclosure with respect to a digital content platform.

### BRIEF DESCRIPTION OF THE DRAWINGS

The foregoing features of the disclosure will be apparent from the following Detailed Description, taken in connection with the accompanying drawings, in which:
**FIG. 1** illustrates a Storify platform of the prior art when creating or editing a collection of curated digital content;
**FIG. 2** illustrates editing or updating a Storify collection of the prior art;
**FIG. 3** illustrates a TweetDeck platform of the prior art when creating or editing a custom TweetDeck timeline;
**FIG. 4** illustrates curating digital content into a TweetDeck custom timeline of the prior art by dragging and dropping;
**FIG. 5** illustrates curating digital content into a TweetDeck custom timeline of the prior art by use of a menu and submenu;
**FIG. 6** is a diagram showing a computer system on which the present disclosure could be implemented;
**FIG. 7** is a diagram showing hardware and software components of a computer system on which the present disclosure could be implemented;
**FIG. 8** illustrates processing steps of the digital content curation system of the present disclosure;
**FIG. 9** is a diagram further illustrating the digital content curation system;
**FIG. 10** is a screenshot of a sign-in page of the digital content curation system;
**FIG. 11** is a screenshot of an application with digital content to be curated;
**FIG. 12** is a screenshot of different collections associated with a particular user account of the digital content curation system;
**FIG. 13** is a screenshot of digital contents stored in a particular collection;
**FIG. 14** is a screenshot of a webpage of one of the collections created by a user;
**FIG. 15** is a screenshot of a first digital content and a second digital content on a website;
**FIG. 16** is a screenshot of a user reply to the first digital content which the user would like to curate;
**FIG. 17** is a screenshot of collections associated with a user ID of the digital content curation system;
**FIG. 18** is a screenshot of extracted digital content associated with a collection title; and
**FIG. 19** is a screenshot of a webpage of a collection created by a user.

### DETAILED DESCRIPTION

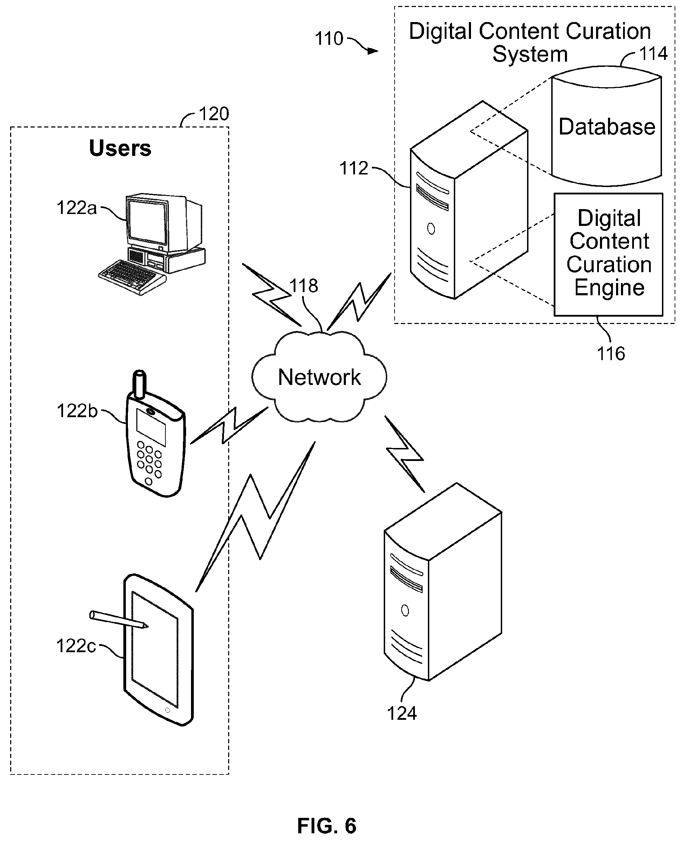

The present disclosure relates to a system and method for curating digital content according to specific embodiments of the invention, as discussed in detail below in connection with **FIGS. 6-19**. The digital content curation system (e.g., website, open source web application, smartphone app, tablet app, etc.) and method of the present disclosure facilitates curation of digital content (e.g., social media content) from a digital content platform, e.g., a website, without a user having to leave said platform, e.g., the website. In other words, the digital content curation system of the present disclosure provides the ability for content curation of digital content of, for example, a website from that website.

Using the digital content curation system of the present disclosure, when a user comes across digital content (e.g., Tweet, post, etc.) when browsing, e.g., a website, that the user would like to bookmark, share, or extract, the user simply replies to the digital content using an extraction tag, which includes an extraction marker and collection title. In other words, from a website account registered with the digital content curation system, for example, a user simply types the extraction tag (e.g., extraction marker and collection title) from any computing device (e.g., computer, mobile device, tablet computer, etc.) to direct the digital content curation system to extract associated digital content from, e.g., the website associated with the website account. In this way, the user can curate a tweet from Twitter, whether from a computer web browser, a mobile web browser, a mobile app, etc.

**FIG. 6** is a diagram showing a computer system on which the present disclosure could be implemented. The digital content curation system indicated generally at **110**, facilitates curating (e.g., managing, editing, updating, etc.) digital content (e.g., posts, tweets, etc.) The digital content curation system **110** comprises a computer system **112** (e.g., a server) having a database **114** stored therein and a digital content curation engine **116**. The computer system **112** could be any suitable computer server (e.g., a server with an INTEL microprocessor, multiple processors, multiple processing cores) running any suitable operating system (e.g., Windows by Microsoft, Linux, etc.). The database **114** could be stored on the computer system **112**, or located externally (e.g., in a separate database server in communication with the computer system **112**).

The digital content curation system **110** is web-based, for example, and can be remotely accessible such that the digital content curation system **110** communicates through a network **118** with one or more users over a variety of computer systems **120** (e.g., personal computer system **122a**, a smart cellular telephone **122b**, a tablet computer **122c**, or other devices). Network communication could be over the Internet using standard TCP/IP communications protocols (e.g., hypertext transfer protocol (HTTP), secure HTTP (HTTPS), file transfer protocol (FTP), electronic data interchange (EDI), etc.), through a private network connection (e.g., wide-area network (WAN) connection, emails, electronic data interchange (EDI) messages, extensible markup language (XML) messages, file transfer protocol (FTP) file transfers, etc.), or any other suitable wired or wireless electronic communications format. Further, the digital content curation system **110** could communicate with one or more servers **124** hosting one or more websites (and/or other digital content platform(s)) which have one or more user accounts registered with the digital content curation system **110**. For example, the digital content curation system **110** could communicate with a social networking website (e.g., Twitter, Facebook, Google+, etc.), and/or any website which enables comment posting by users (e.g., registered or unregistered).

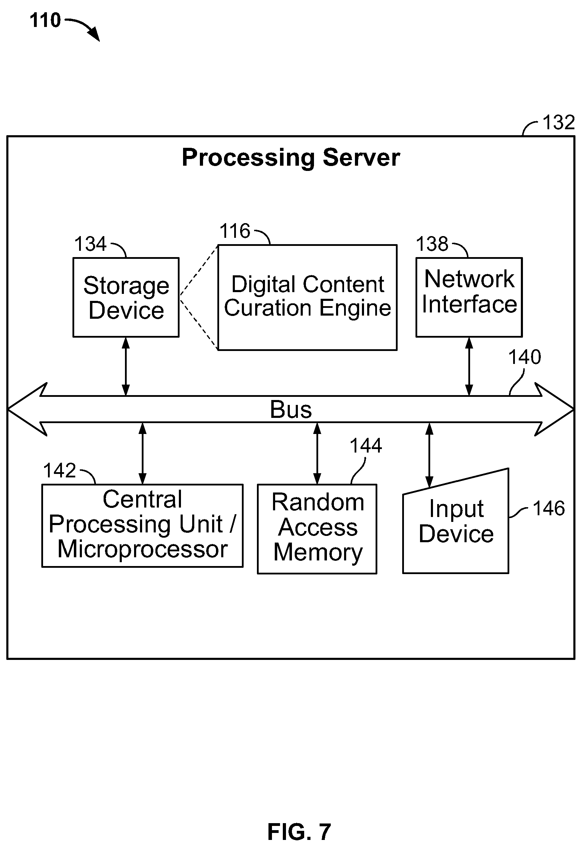

**FIG. 7** is a diagram showing in more detail hardware and software components of a computer system on which the digital content curation system **110** of the present disclosure could be implemented. The digital content curation system **110** comprises a processing server **132** which could include a storage device **134**, a network interface **138**, a communications bus **140**, a central processing unit (CPU) (microprocessor) **142**, a random access memory (RAM) **144**, and one or more input devices **146**, such as a keyboard, mouse, etc. The server **132** could also include a display (e.g., liquid crystal display (LCD), cathode ray tube (CRT), etc.). The storage device **134** could comprise any suitable, computer-readable storage medium such as disk, non-volatile memory (e.g., read-only memory (ROM), erasable programmable ROM (EPROM), electrically-erasable programmable ROM (EEPROM), flash memory, field-programmable gate array (FPGA), etc.). The server **132** could be a networked computer system, a personal computer, a smart phone, tablet computer etc. It is noted that the server **132** need not be a networked server, and indeed, could be a stand-alone computer system.

The functionality provided by the present disclosure could be provided by a digital content curation program/engine **116**, which could be embodied as computer-readable program code stored on the storage device **134** and executed by the CPU **142** using any suitable, high or low level computing language, such as Python, PHP, Java, C, C++, C#, .NET, MATLAB, etc. The network interface **138** could include an Ethernet network interface device, a wireless network interface device, or any other suitable device which permits the server **132** to communicate via the network. The CPU **142** could include any suitable single- or multiple-core microprocessor of any suitable architecture that is capable of implementing and running the engine **116** (e.g., Intel processor). The random access memory **144** could include any suitable, highspeed, random access memory typical of most modern computers, such as dynamic RAM (DRAM), etc.

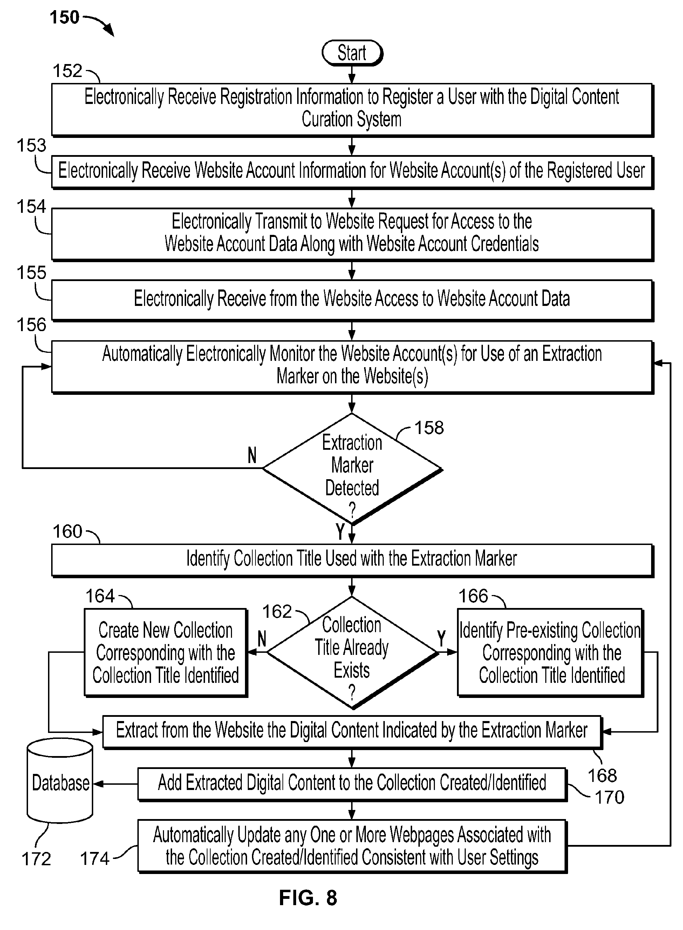

**FIG. 8** illustrates processing steps **150** of the digital content curation system **110** of the present disclosure. The order of these processing steps are exemplary and could be executed in a different order. The steps are described in connection with a web site, but are more generally applicable to a digital content platform other than, and/or in addition to, a web site. In step **152**, the digital content curation system **110** electronically receives registration information to register a user therewith. Registration information could include username, password, age, residential address, email address, phone number, etc. A user could sign into the digital content curation system **110** by downloading a mobile application to the user's smart cellular telephone **122b**, accessing the web application via a web browser, etc.

Once a user is registered, for example, in step **153**, the digital content curation system **110** electronically receives website account credentials for website account(s) of the registered user. The digital content curation system **110** could receive website account credentials from any website (and any type of website) with which the user has a registered account. For example, the digital content curation system **110** could receive website account credentials for a social network website (e.g., Twitter, Facebook, LinkedIn, Instagram, etc.), for a news reporting website (e.g., New York Times, Huffington Post, etc.), for a news aggregator website (e.g., Reddit), for an e-commerce store (e.g., Amazon), etc.

In step **154**, the digital content curation system **110** electronically transmits to the website (e.g., Twitter) via a website API (e.g., via Twitter API) a request for access to website account data (e.g., Twitter account data) of the registered user, along with website account credentials (e.g., Twitter username and password). In step **155**, the digital content curation system **110** electronically receives from a digital content platform, e.g., a website, access to account, e.g., website account, data (e.g., user data stream) of the registered user. Accordingly, the digital content curation registered account can be linked to one or more website accounts (or other digital content platforms) of the user.

In step **156**, the digital content curation system **110** automatically electronically monitors (e.g., polls) the digital content platforms, e.g., website account(s) (e.g., website account data, user data stream, etc.) for use of an extraction marker (discussed in more detail below) on the website(s) by the registered user. More specifically, the digital content curation system **110** automatically electronically monitors (e.g., polls) activity (e.g., digital content) on one or more websites, and screens for an extraction marker (e.g., && or $$, etc.) in digital content (e.g., comments, posts, and other similar website activity) created by a linked website account. Example digital content could include comments, YouTube videos, Tweets, Vines, Instagram posts, Facebook posts, New York Time articles, etc.

In step 158, the digital content curation system **110** determines whether an extraction marker has been detected. If not, the process reverts to step **156**. If an extraction marker has been detected, then in step **160**, the digital content curation system **110** identifies a collection title used with the extraction marker as part of an extraction tag. An extraction tag (described in more detail below) comprises the extraction marker and collection title. Any unique extraction marker could be used, such as ##, **, ++, #$, ~~, *[]*, #*, ^, *!!, CollectionTitle:*, ###, *CN, CN#,* etc. In an exemplary list where the collection to be extracted to was titled *CollectionName*, some example extraction tags which use the example extraction markers previously described include *##CollectionName*, ***CollectionName*, ++*CollectionName*, #$*CollectionName*, *~~CollectionName*, *[CollectionName]*, #**CollectionName*, ^*CollectionName*, *!!CollectionName, CollectionTitle:CollectionName,* ###*CollectionName*, *CNCollectionName*, *CN*#*CollectionName*, etc.

The extraction marker could be any type of extraction marker. More specifically, as described above, an example extraction tag is a two part string which includes an extraction marker and a collection title adjacent thereto. The extraction marker could be any suitable string, such as those listed in the above referenced exemplary list. The text/characters that are selected (e.g., by the programmer) to form the extraction marker are completely arbitrary, and any text/characters could be used as extraction marker (e.g., as set by the digital content curation system **110** and/or as set by the user), as long as the digital content curation system **110** monitors and filters for that particular extraction marker. In other words, the text/characters forming the extraction marker can be any text/characters so long it is those text/characters that are being monitored for.

In step **162**, the digital content curation system **110** determines whether the collection title associated with the extraction tag already exists. If not, in step **164**, the digital content curation system **110** creates a new collection corresponding with the collection title identified. If a collection title already exists, then in step **166** the digital content curation system **110** identifies the pre-existing collection corresponding to the collection title identified.

Either way, in step **168**, the digital content curation system **110** extracts from the website, for example, the digital content indicated by (e.g., associated with, proximate to, etc.) the extraction marker. For example, the digital content curation system **110** could identify a reply comment with an extraction tag of a linked website account, which could indicate that the digital content curation system **110** should extract the digital content being replied to (discussed in more detail below). Step **168** could be executed before the collection title is identified in steps **162-166**. In step **170**, the digital content curation system **110** adds the extracted digital content to the collection created/identified by the digital content curation system **110**. The extracted digital content and respective collections could be stored in a database **172** (e.g., datastore) in electrical communication with the digital content curation system **110**.

In step **174,** the digital content curation system **110** could automatically create/update (e.g., simultaneously) any one or more webpages (e.g., ticker, e-commerce store front, etc.) associated with the collection created/identified consistent with user settings. The digital content curation system **110** allows a user to share and/or embed the collection in webpages. Further, the digital content curation system **110** could create a webpage which has a URL address associated with the collection title and/or the username of the registered user (e.g., the collection title and/or username could be a part of the URL web address). For example, if a new collection title *NewCategory* is used in an extraction tag (e.g., *&&NewCategory*) by the registered user *NewUser7*, the digital content curation system **110** could create a new collection *NewCategory* with the extracted digital content and create a webpage with the extracted digital content with a URL of *hashfav.com*/*NewUser7*/*NewCategory.* Of course, a user could choose which, if any, collections to share by use of privacy settings. For example, a user could choose the privacy settings for a particular collection to be public, private, or shared with specific individuals, etc.

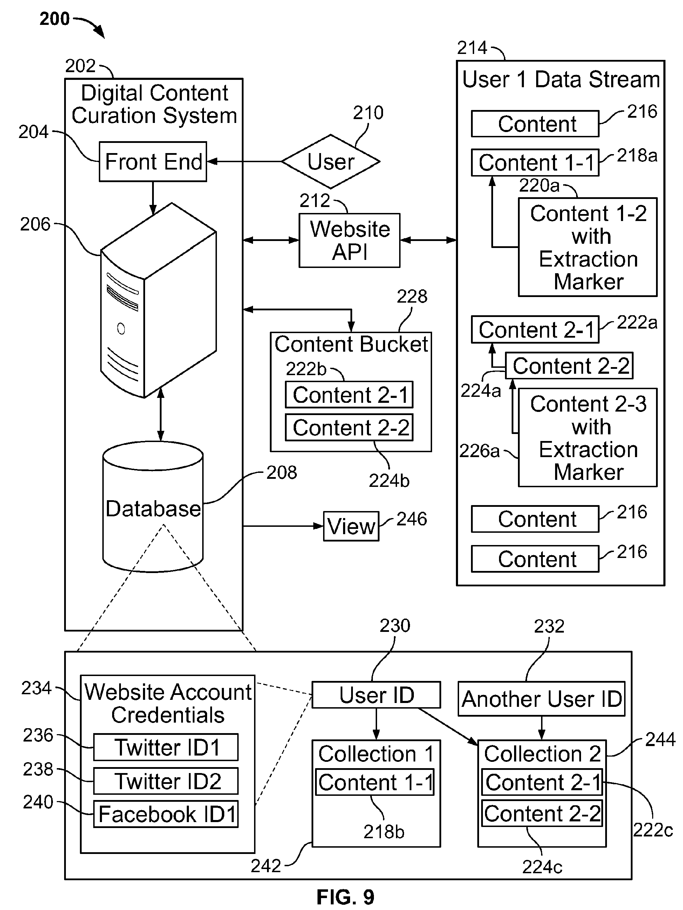

**FIG. 9** is a diagram **200** further illustrating the digital content curation system **202**. More specifically, the digital content curation system **202** includes a front end **204**, a server **206**, and a database **208**, where the server **206** is in electrical communication with the front end **204** and the database **208**. The front end **204** could be a website or mobile application (e.g., iOS, android, etc.), and could electronically communicate with one or more users (e.g., user **210**) over a network (e.g., receiving registration information, etc.). The mobile application could be downloaded to a user's smart cellular telephone **122b**. The database **208** could be a datastore or any type of database (e.g., Postgres, etc.).

As described in **FIG. 8** above, the front end **204** could electronically receive registration information from a user **210** (e.g., see step **152**), such as via the smart cellular telephone **122b** of the user **210**. The front end **204** could communicate the registration information to the server **206** to create a new curation account (e.g., a new digital content curation system account) for the user, along with a unique user ID **230** to identify the user **210**. This information could be stored in database **208**. The front end **204** could also receive (e.g., via the smart cellular telephone **122b** of the user **210**) website account credentials **234** (e.g., website account ID, password, etc.), and communicate the website account credentials to the server **206** to associate the website account credentials with the user ID **230** (e.g., see step **153**). Each user ID **230** could be associated with one or more website account credentials **234**, even if the website account credentials **234** are from the same and/or different websites. In other words the user ID **230** could be associated with one or more website accounts of one or more different websites (e.g., Tumblr ID, Facebook ID, Twitter ID, YouTube ID, New York Times ID, Amazon ID, etc.), or with multiple accounts of the same website (e.g., @ronak, @ronak2, etc.). For example, a user ID **230** could be associated with a first Twitter account (e.g., Twitter ID1 **236**), a second Twitter account (e.g., Twitter ID2 **238**), and/or a Facebook account (e.g., Facebook ID1 **240**).

**FIG. 9** also shows a number of other components which are described in more detail below. For example, **FIG. 9** shows a website API **212** which facilitates communication between the digital content curation system **202** and another digital content platform (e.g., another website), and a user data stream **214** including digital contents **216, 218a, 220a, 222a, 224a, 226a,** wherein some of the digital contents are associated with an extraction marker and others are not associated with an extraction marker. **FIG. 9** also shows a content bucket **228** which could store (e.g., temporarily) digital contents (e.g., content 2-1 **222b**, content 2-2 **224b**) during the extraction process. **FIG. 9** shows a user ID **230** and another user ID **232** and their respective access to collection 1 **242** (associated with extracted content 1-1 **218b**) and collection 2 **244** (associated with extracted content 2-1 **222c** and extracted content 2-2 **224c**). **FIG. 9** further shows a view **246** associated with a resource identifier (e.g., website URL) for public and/or private access (e.g., via the Internet) of extracted digital contents.

The front end **204** could electronically transmit to the website over the network a request for access to account data, e.g., website account data, along with website account credentials (e.g., see step **154**). The request could be transmitted via a website application program interface (API) **212,** such as Twitter API. The front end **204** could electronically receive from the website access to website account data, such as a user data stream **214** (e.g., see step **155**). The user data stream **214** could comprise all activity (e.g., digital content) associated with a user account (e.g., created by a user) on a particular website. For example, the Twitter user data stream are all of the Tweets, Reply Tweets, etc. that are associated with a Twitter user account on the Twitter website.

Upon initial access to the website account, the digital content curation system **202** could extract digital content that has already been marked (e.g., favourite) by the user through the website platform, and automatically organize such content into one or more collections. For example, prior to using the digital content curation system **202,** a user may have marked as a favourite one or more tweets using the Twitter website platform. The digital content curation system **202** could extract the marked content and store in a collection named "uncategorized favourites."

Once the account is linked, for example, the digital content curation system **202** monitors (e.g., by an authenticated HTTP request) a user data stream **214** of digital content (e.g., tweets, replies, favourites, unfavourites, etc.) of the user **210** via the website API **212** (e.g., see step **156**). The user data stream **214** could be continuous or intermittent. For example, requests by the digital content curation system **202** for updates to the user data stream **214** of digital content could be made to the website API at regular intervals (e.g., every minute, five minutes, hour, etc.).

The user data stream **214** could comprise all digital contents associated with a website account (e.g., such as those made by a user **210** via a smart cellular telephone **122b**), including digital contents without an extraction marker **216**, and digital contents associated with an extraction marker **220a, 226a**. The user data stream **214** could include digital contents which are part of a thread. For example, a post (e.g., digital content) could be a reply to a parent post, such that the reply and the parent post are part of the same thread. As another example, a post (e.g., digital content) could be a reply to a parent post, which is a reply to a grandparent post, such that the reply, parent post, and grandparent post are part of the same thread.

When the digital content curation system **202** identifies digital content with an extraction marker **220a, 226a** (e.g., see step **158**), the digital content curation system **202** polls the data string, parses the extraction tag, extracts the associated digital content, and at least temporarily stores the extracted digital content in a content bucket **228**. More specifically, when digital content with an extraction marker (e.g., marked digital content) is identified, for example, the digital content curation system **202** then identifies the parent digital content the marked digital content was a reply to (e.g., in Twitter each tweet contains a Boolean describing whether the tweet is a reply to another tweet and, if so, the tweet ID that it was a reply to). The digital content curation system **202** extracts the parent digital content and temporarily stores it in a content bucket **228** (e.g., see step **168**).

The digital content curation system **202** checks if the parent digital content was itself a reply to another parent digital content (e.g., grandfather digital content). If not, the digital content curation system **202** exports the content bucket to add the extracted parent digital content to the collection identified in the extraction marker. Otherwise, the digital content curation system **202** identifies the grandfather digital content, extracts the grandfather digital content and temporarily stores the grandfather digital content in a content bucket **228**. This continues up the thread until the end of the thread (e.g., the original digital content) is reached. The digital content curation system **202** exports the content bucket to add the extracted digital content thread to the collection identified in the extraction marker. Of course, settings could be provided for the user such that only the digital content immediately replied to is extracted (e.g., extract only the parent digital content), or limit how much digital content can be extracted for any single use of an extraction marker (e.g., extract the parent digital content and grandfather digital content), etc.

For example, as shown, the digital content curation system **202** could identify content 1-2 with extraction marker **220a** (e.g., content 1-2). The digital content curation system **202** parses the extraction tag of content 1-2 **220a** to obtain the ID of content 1-1 **218a** (to which content 1-2 was a reply), and extracts content 1-1 **218a** to content bucket **228**. The digital content curation system **202** checks if content 1-1 **218a** is itself a reply to another digital content.

As another example, as also shown, the digital content curation system **202** could identify content 2-3 with extraction marker **226a** (e.g., content 2-3). The digital content curation system **202** processes content 2-3 **226a** to obtain the ID of content 2-2 **224a** (to which content 2-3 was a reply), and extracts content 2-2 **224a** to content bucket **228**. The digital content curation system **202** checks if content 2-2 **224a** is itself a reply to another digital content. The digital content curation system **202** processes content 2-2 **224a** to obtain the ID of content 2-1 **222a** (to which content 2-2 was a reply), and extracts content 2-1 **222a** to content bucket **228**. The digital content curation system **202** checks if content 2-1 **222a** is itself a reply to another digital content.

If the digital content curation system **202** identifies digital content with an extraction marker, but does not identify such content as a reply (e.g., unable to identify original content), the digital content curation system **202** extracts the digital content with an extraction marker and temporarily stores it in the content bucket **228**. For example, if a standalone tweet contains an extraction marker (and is not a reply to another tweet), the digital content curation system **202** would extract the standalone tweet itself.

Once the digital content curation system **202** has extracted all of the digital content associated with the extraction marker to the content bucket (consistent with the user settings), for example, the extracted digital contents of the content bucket are exported to the collection identified in the extraction tag (e.g., see step **156**), where the collection identified is a pre-existing collection or a collection to be newly created by the digital content curation system **202**. The content bucket **228** has a website account ID (e.g., Twitter ID, Facebook ID, etc.) associated with the marked digital content, as well as the extraction tag thereof (e.g., the extraction marker and collection title) (e.g., see step **160**). The digital content curation system **202** retrieves the website account ID from the content bucket and queries the database **208** for the user ID with the matching website account ID. The digital content curation system **202** requests the collections associated with the user ID, and checks if any of the collections associated with the user ID match the collection title identified in the extraction marker (e.g., see step **162**).

In this way, the digital content curation system **202** checks if the collection title has been used before for the associated user ID, and if so adds the extracted digital content to that collection (e.g., see step **166** and **170**). Otherwise, if the collection title has not yet been created, the digital content curation system **202** creates a new collection for that user and adds the extracted digital content thereto (e.g., see steps **164** and **170**). For example, content 2-2 **224b** and content 2-1 **222b** of content bucket **228** (which were extracted from content 2-2 **224a** and content 2-1 **222a** from user data stream **214**) could be added to collection 2 **244** as content 2-1 **222c** and content 2-2 **224c**. Alternatively, the content bucket **228** could be omitted completely, such that content is extracted directly into the collection. For example, content 1-1 **218** from the user data stream **214** could be added to collection **1 242** as content 1-1 **218b**.

Accordingly, a user can curate digital content to one or more collections from one or more website account IDs (e.g., Twitter ID1 **236**, Twitter ID2 **238**, etc.). Further, one or more users (e.g., more than one user ID) can curate digital content to the same collection. For example, a first user associated with user ID **230** and a second user associated with another user ID **232** could both update collection 2 **244**. Further, the user could curate (e.g., add, remove, move, etc.) digital content within one or more collections from a website without having to leave the website.

The digital content curation system **202** could update a view **246,** such as a webpage (e.g., *www.hashfav.com*/*UserName*/*CollectionName*) or a client (e.g., see step **174**). The view **246** could be updated by pulling the relevant digital content (e.g., of the collection associated with the view **246**) whenever the view is accessed and/or pushing the relevant digital content whenever the database is updated (e.g., whenever a relevant collection associated with the view **246** is updated) consistent with the user settings (e.g., user privacy settings).

The digital content curation system **202** could be a platform integrated with or separate from the website platform. For example, if the digital content curation system **202** is integrated with the website platform, the digital content curation system could communicate without an API or monitor a user data stream. For example, if the digital content curation system **202** was integrated with Twitter, when a user posts a tweet, the Twitter platform could initiate a function that looks for the extraction marker within the Tweet. If the Twitter platform identifies the extraction marker (and/or associated extraction tag), the Twitter platform could proceed similarly to that described above.

As another alternative, the digital content curation system **202** could monitor the digital content of all users of a website. In this case, when an extraction marker (and/or extraction tag) is identified in a digital content, the digital content curation system **202** could proceed similarly to that described above. This could be implemented on a third party website if the digital content curation system **202** has appropriate access to the third party website, or this could be integrated into the website platform itself (e.g., without separate user registration).

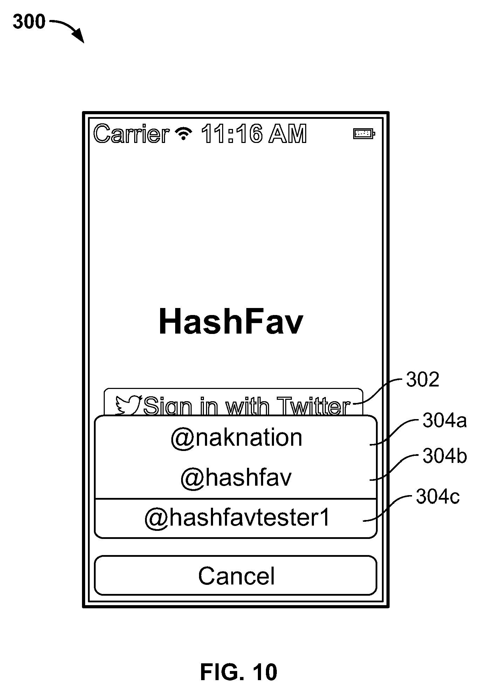

**FIGS. 10-14** are screenshots illustrating example use of the digital content curation system using a mobile device. More specifically, **FIG. 10** is a screenshot of a sign-in page 300 of the digital content curation system. The sign-in page **300** allows a user to sign-in to the digital content curation system via the sign-in button **302** using the website account ID of a third party website. For example, a user could sign-in to the digital content curation system using one or more Twitter IDs.

To expedite sign-in, the digital content curation system could save and display website account IDs and/or curation account IDs that have been previously used to sign into the digital content curation system and/or that are linked with the digital content curation system. For example, upon receiving input from the user clicking the sign-in button **302**, the digital content curation system could display a submenu of several Twitter accounts **304a, 304b, 304c,** thereby providing the user with a chance to elect one of them (e.g., by clicking).

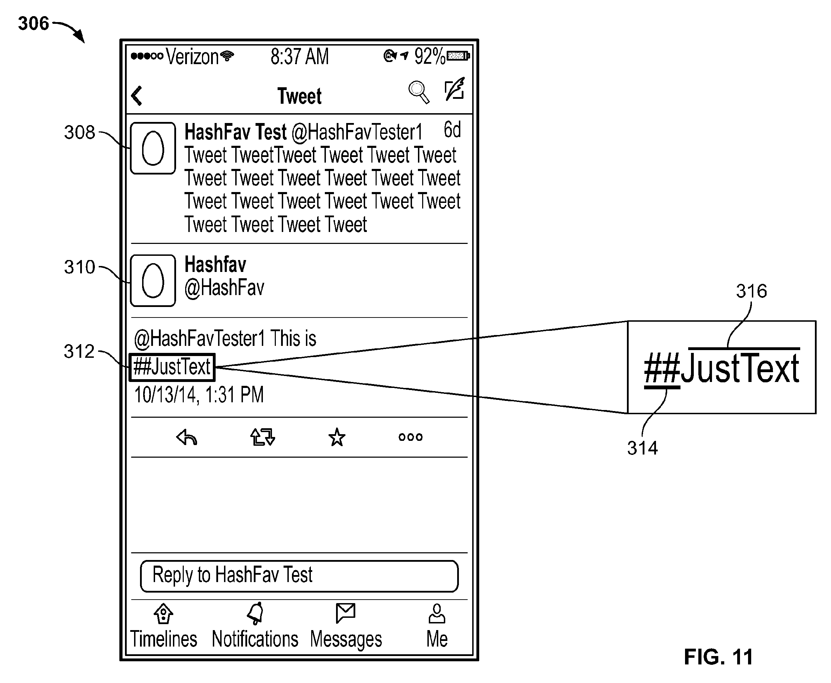

**FIG. 11** is a screenshot **306** of an application with digital content **308** to be curated. To curate the digital content **308** the user replies with reply digital content **310**, the reply digital content **310** including extraction tag **312**. The extraction tag **312** includes the extraction marker **314** (e.g., ##) and collection title **316** (e.g., *JatstText*). The extraction marker **314** indicates that the user would like to curate content, the collection title **316** indicates the collection the user would like to extract the digital content to, and the parent digital content **308** (associated with the reply digital content **310**) is the content the user would like to extract. As indicated above, the extraction marker could be any type of extraction marker (e.g., any suitable string of text/characters). The text/characters of the extraction marker is arbitrarily defined - any text/characters could be used for the extraction marker - so long as the digital content curation system 110 monitors and filters for that particular extraction marker (e.g., that particular text/characters).

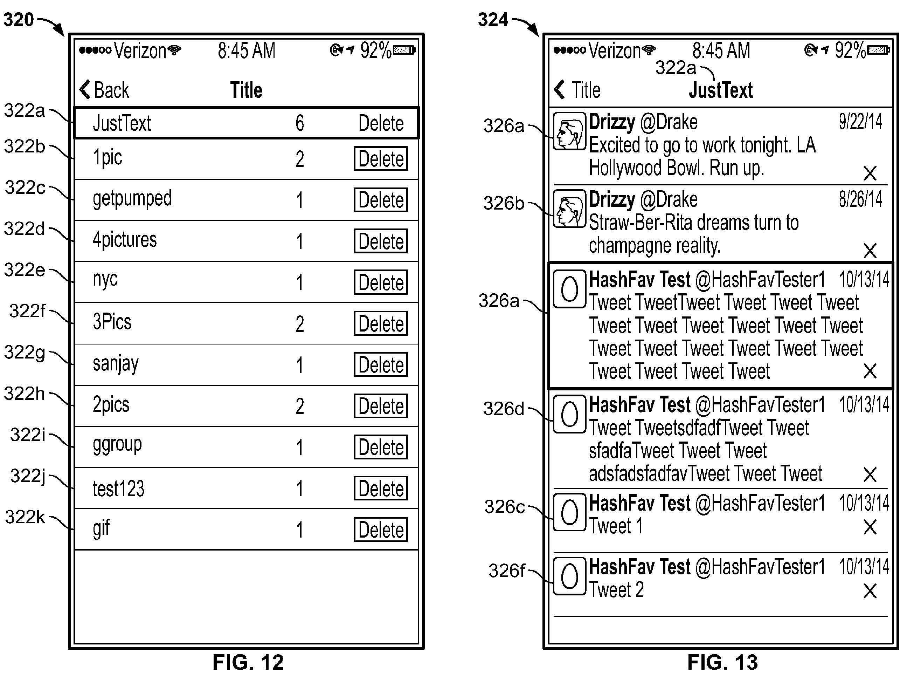

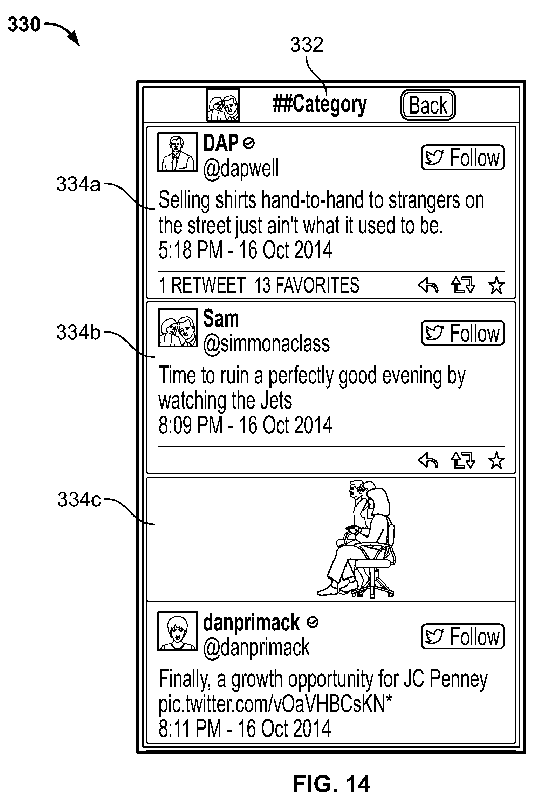

**FIG. 12** is a screenshot **320** of different collections **322a-322k** associated with a particular user account of the digital content curation system. **FIG. 13** is a screenshot **324** of digital contents **326a-326f** stored in a particular collection **322a** (e.g., *JustText*). **FIG. 14** is a screenshot **330** of a webpage of one of the collections created by a user. More specifically, the extracted digital contents **334a-334c** stored under the collection title ##*Category* are displayed on a webpage (or otherwise publicly or selectively viewable by other users). Accordingly, when the user curates additional digital content to this collection, the associated webpage will update with the newly curated digital content.

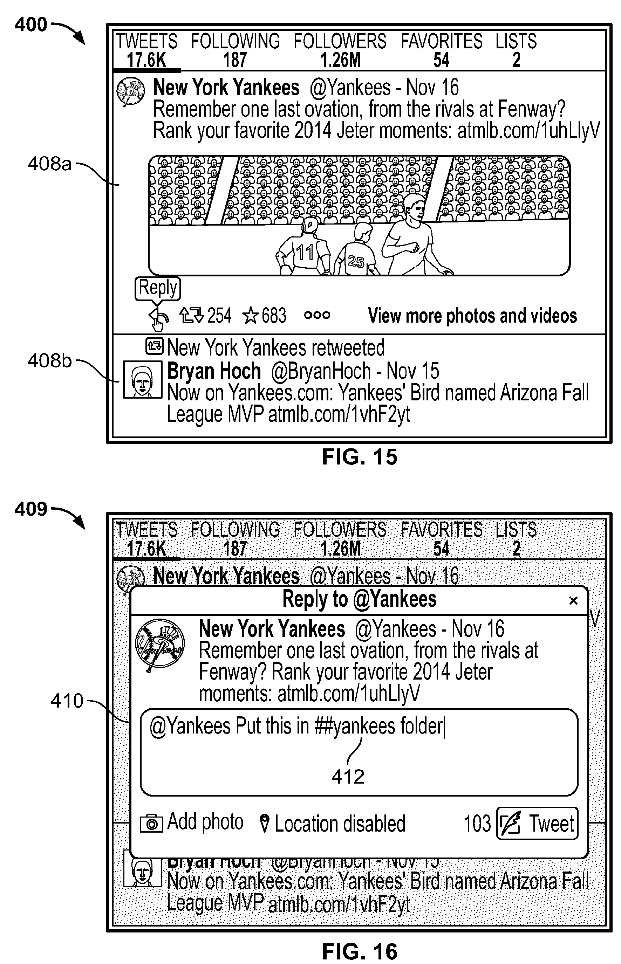

**FIGS. 15-19** are screenshots illustrating use of the digital content curation system using a computer browser. More specifically, **FIG. 15** is a screenshot **400** of a first digital content **408a** (e.g., a first Tweet) and a second digital content **408b** (e.g., a second Tweet) on a website (e.g., Twitter). **FIG. 16** is a screenshot **409** of a user reply **410** to the first digital content **408a** which the user would like to curate. Within the user reply **410**, the user includes the extraction marker ##*yankees.* Accordingly, the digital content curation system parses the text of the reply to identify the extraction marker ## and the collection title *Yankees* the user would like to curate the digital content to. The digital content curation system identifies and parses the extraction marker, and extracts the parent digital content.

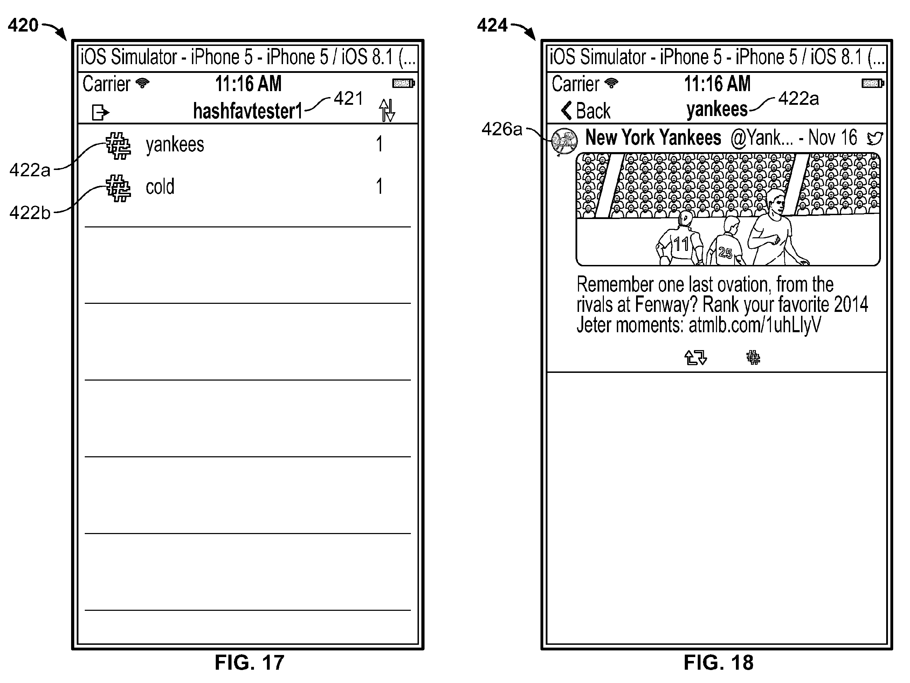

**FIG. 17** is a screenshot **420** of collections associated with user ID *hashfavtester1* of the digital content curation system. More specifically, the user ID *hashfavtester1* includes a collection title *yankees* **422a** and collection title *cold* **422b**. **FIG. 18** is a screenshot **424** of extracted digital content **426a** (as also shown in **FIGS. 15-16**) associated with the collection title *yankees* **422a**.

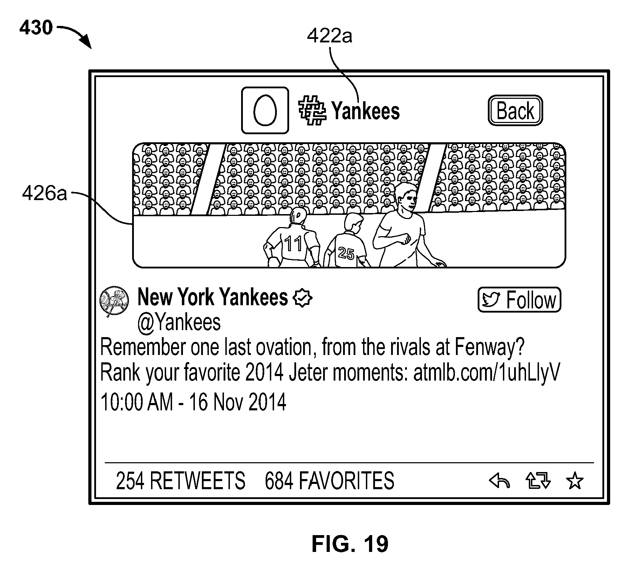

**FIG. 19** is a screenshot **430** of a webpage of one of the collections created by a user. More specifically, the extracted digital content **426a** stored under the collection title ##*yankees* **422a** are displayed on a webpage (or otherwise publicly or selectively viewable by other users). Accordingly, when the user curates additional digital content to this collection, the associated webpage will update with the newly curated digital content.

Having thus described the system and method in detail, it is to be understood that the foregoing description is not intended to limit the scope thereof. It will be understood that the embodiments of the present disclosure described herein are merely exemplary and that a person skilled in the art may make any variations and modification without departing from the scope of the disclosure. All such variations and modifications, including those discussed above, are intended to be included within the scope of the disclosure.

## Claims

1. A method for curating digital content, comprising:
electronically receiving, at a digital content curation system, registration information to register a user therewith;
electronically receiving, at the digital content curation system, digital content platform account credentials for a digital content platform account of a digital content platform;
electronically transmitting, by the digital content curation system to the digital content platform, a request for access to digital content platform account data, along with the digital content platform account credentials;
electronically automatically monitoring, by the digital content curation system, digital content platform account data for an extraction marker of an extraction tag;
automatically detecting, by the digital content curation system, the extraction marker of the extraction tag in marked digital content created by the digital content platform account;
automatically identifying, by the digital content curation system, a collection title of the extraction tag adjacent to the extraction marker;
electronically extracting, by the digital content curation system, parent digital content indicated by the extraction marker of the marked digital content; and
electronically adding to a database, by the digital content curation system, the parent digital content extracted to a collection having the collection title identified.

2. The method of Claim 1, further comprising determining whether the collection title identified already exists in the database.

3. The method of Claim 2, wherein if the collection title does not already exist, the digital content curation system automatically creates a new collection corresponding to the collection title identified.

4. The method of Claim 3, further comprising automatically creating a webpage associated with the new collection.

5. The method of Claim 2, wherein if the collection title already exists, the digital content curation system identifies the pre-existing collection corresponding to the collection title identified.

6. The method of Claim 5, further comprising automatically updating a webpage associated with the pre-existing collection.

7. The method of any preceding claim, wherein the step of electronically extracting parent digital content includes extraction of a thread of parent digital content associated with the marked digital content.

8. The method of any preceding claim, wherein the digital content platform comprises a website.

9. A digital content creation system arranged to perform the method of any preceding claim.

10. A computer program product comprising program code means arranged to perform the method of any one of claims 1 to 8 when executed on a suitably arranged computer.
